# EUROPEAN PATENT APPLICATION

(11) **EP 4 098 497 A1**
(43) Date of publication of application: **07.12.2022**
(21) Application number: 21748478.1
(22) Date of filing: 27.01.2021
(51) Int. Cl.: B60S 1/56

(54) **SENSING DEVICE**

(30) Priority: 29.01.2020 JP 2020012235; 30.06.2020 JP 2020113217
(71) Applicant: Earth Support LLC, Takatsuki-shi, Osaka, 569-1118 (JP)
(72) Inventor: MATSUDA Masamichi, Osaka-shi, Osaka 532-0003 (JP)
(74) Representative: Grünecker Patent- und Rechtsanwälte PartG mbB
(86) International application number: PCT/JP2021/002830
(87) International publication number: WO 2021/153610

(57) **Abstract**

Realization of a sensing device that does not suspend the sensing function. A sensing device 2 having a sensor 4 for sensing the external environment through a window frame portion 3 provided at a predetermined position of a main body 1 of a vehicle or the like, and
a plurality of protective members 6 for protecting the sensor 4 are provided. At least one of the protective members 6 is arranged at the window frame portion 3, and the sensor 4 is arranged inside the protective member 6 at the window frame portion 3 to be protected, and the protective member 6 at the window frame portion 3, is evacuated from the window frame portion 3 when it becomes dirty or periodically, and instead, another protective member 6 is moved to be arranged at the window frame portion 3 and the evacuated protective member 6 is washed by the washing device 19 so that it can be used again.

## Description

### [Technical field]

The present invention relates to a sensing device attached to an automobile, a drone, etc. and having a sensor for sensing the state of the external environment.

### [Background technology]

For example, when realizing automatic driving, various sensors such as optical cameras, LiDAR, radars, and ultrasonic sensors are used to grasp the state of the external environment. However, since a car runs on a rainy day or the like, muddy water or dust may adhere to the important sensor, and the function of the sensor may deteriorate or stop.

As a result, the car running using the sensor becomes dangerous. Therefore, some measures have been taken to clean it (Patent Document 1).

### [Prior Art Document]

### [Patent Document]

[Patent Document 1] Japanese Patent Application Laid-Open No. 2019-156621

### [Summary of the invention]

### [Problems to be solved by the invention]

However, it takes several seconds while cleaning, and the sensing function is reduced or stopped during that time, which is dangerous for a running car.

It is an object of the present invention to provide a sensing device that solves the problem of such a sensor in view of the above-mentioned problems of the prior art.

### [Means for solving problems]

The first invention of the sensing device having a sensor that senses the external environment through a window frame portion provided at a predetermined position of a main body of a vehicle or the like, wherein
a plurality of protective members are provided to protect the sensor,
at least one of the plurality of protective members is arranged at the window frame portion,
the sensor is placed inside the protective member at the window frame portion, to be protected,
the protective member placed at the window frame portion is evacuated from the window frame portion when it becomes dirty or periodically, and instead of it another new protective member moves to the window frame portion,
the protective member that has been evacuated is washed by a washing machine to be available again.

The second invention of the sensing device according to the first invention, wherein

In a sensing position state in which at least one of the plurality of protective members is arranged at the window frame portion, a main surface of the arranged protective member faces the window W of the window frame portion, and a gap between the arranged protective member and the window frame portion is shielded by a shielding member to be sealed so that dust and the like do not enter from the outside,
at least a main surface of the protective surface of the new other protective member may not come into contact with the window frame portion when it comes to the window frame portion in order that it is moved and arranged at the window frame portion.

The third invention of the sensing device according to the second invention, wherein
the shielding member is attached to the protective member side.

The fourth invention of the sensing device according to the first invention, wherein
the evacuation from the window frame portion and the movement to the window frame portion are realized in such a manner that the plurality of protective members are endlessly connected to each other horizontally, vertically, or diagonally, and the entire connected protective member rotates.

The fifth invention of the sensing device according to the fourth invention, wherein
the evacuation of the protective member arranged at the window frame portion is performed by the rotational operation of the entire protective member,
the movement arrangement of the next new protective member to the window frame portion is performed by the rotational operation of the entire protective member,
when the protective member is evacuated and moved to be arranged, the rotation center axis in the rotational operation of the entire connected protective member, moves away from the window frame portion fixed to the main body of the vehicle or the like, and returns to the original position with approaching,
when sensing, the protective member is in close contact with the window frame portion.

The sixth invention of the sensing device according to the fifth invention, wherein
the entire connected protective member constitutes a part of a substantially spherical protective device,
the sensor is arranged in the spherical protective device, and by the rotation of the spherical protective device, a plurality of the protective members are replaced sequentially.

The seventh invention of the sensing device according to the sixth invention, wherein
an urging means for urging the spherical protective device toward the window frame portion, is provided,
a gear is attached to a rotating shaft of the spherical protective device, and by moving the gear with a solenoid rod or a tip of the rotating arm, the rotating shaft is evacuated in a direction away from the window frame portion and approaches to the window frame portion again, while being rotated by a predetermined angle, so that the evacuation and movement to be arranged of the protective member against the window frame portion, is realized.

The eighth invention of the sensing device according to the fourth invention, wherein
the evacuation of the protective member arranged at the window frame portion is performed by the rotational operation of the entire protective member,
the movement arrangement of the next new protective member to the window frame portion is performed by the rotational operation of the entire protective member,
when the protective member is evacuated and moved to be arranged, the window frame portion is separated and moved from the rotation center axis in the entire rotational operation of the protective member, the axis being fixed to the main body of the vehicle or the like, and the window frame portion returns again to the original position with approaching,
when sensing, the window frame member is in close contact with the protective member.

The nineth invention of the sensing device according to the fourth invention, wherein
the evacuation of the protective member arranged at the window frame portion is performed by the rotational operation of the entire protective member,
the movement arrangement of the next new protective member to the window frame portion is performed by the rotational operation of the entire protective member,
when the protective member is evacuated and moved to be arranged and when during the sensing, the rotation center axis in the entire rotational operation of the protective member does not separate or move closer against the window frame portion, and
when the protective member is evacuated and moved to be arranged and when during the sensing, the window frame portion does not separate or move closer against the rotation center axis in the entire rotational operation of the protective member.

The tenth invention of the sensing device according to the nineth invention, wherein
the protective member is a flat plate or a curved plate, and the window frame portion is a flat frame or a curved frame.

The 11th invention of the sensing device according to the nineth invention, wherein
a gap generated between the protective member and the window frame portion during the sensing, is shielded by a shielding member provided on the protective member side, or provided on the window frame portion side, or both sides.

The 12th invention of the sensing device according to the 11th invention, wherein
the window frame portion is a curved frame having an arc shape that is convex outward corresponding to the rotational operation of the protective member,
the shielding member is provided on the protective member side.

The 13th invention of the sensing device according to the 11th invention, wherein
the protective member is a flat plate,
the shielding member is provided on the window frame portion side,
left and right portions of the shielding member are provided at left and right positions on the window frame portion side, and
upper and lower portions of the shielding member are provided at the upper and lower positions of the window frame portion side respectively,
the upper and lower positions of the shielding member have an outwardly convex arc shape corresponding to the rotational movement of the protective member, and
at the upper and lower portions of the protective member, an arc-shaped eaves corresponding to the arc-shaped shape of the shielding member, are formed.

The 14th invention of the sensing device according to the 11th invention, wherein
the protective member is a curved plate, and
an arc-shaped shielding member is provided at the upper and lower positions on the window frame portion side, and
a vertical shielding member is provided at the left and right positions on the protective member side.

The 15th invention of a vehicle provided with the sensing device according to any one of the 1 to 14th inventions.

### [Effect of the invention]

According to the first aspect of the present invention, when the protective member becomes dirty, the next new protective member can be immediately supplied to the window frame portion, so that the concern that the sensing function is interrupted is eliminated.

According to the second invention, the main surface of the new protective member does not get dirty even if it moves.

According to the third aspect of the present invention, the main surface of the new protective member does not get dirty even if it moves.

According to the fourth invention, the protective member is smoothly replaced.

According to the fifth aspect of the present invention, since the protective member is separated from the window frame portion when evacuated or approached, there is no concern that the new protective member is rubbed and soiled by the window frame portion, and during normal sensing, since there are no gaps, there is no concern that dust or the like will enter the inside of the main body through the gaps in the window frame.

According to the sixth invention, the sensor is protected by a spherical protective device even if dust gets inside the car body. Further, even if the dirty protective member is washed with a cleaning liquid, there is no concern that the electronic device of the sensor will be damaged.

According to the seventh aspect of the present invention, it is possible to realize evacuation and approach while being separated by a simple configuration of a solenoid and a rotating arm.

According to the eighth aspect of the present invention, when the protective member evacuates or approaches, the window frame portion side approaches the window frame portion separately, so that there is no concern that the new protective member is rubbed by the window frame portion and becomes dirty, and during normal sensing, since there are no gaps, there is no concern that dust or the like will enter the inside of the main body through the gaps in the window frame.

According to the ninth aspect of the present invention, when the protective member is replaced, the protective member and the window frame portion do not separate from each other or move close to each other, so that the structure is simplified and it is good for failure.

According to the tenth invention, there is a merit that a flat plate plate or a curved plate can be selected according to the type of the sensor or the arrangement of the sensors.

According to the 11th invention, the intrusion of dust from the outside can be prevented by providing the shielding member.

According to the 12th invention, by closing, the protective member cannot be moved for replacement, and the clean surface of the new protective member is not rubbed and soiled.

According to the 13th invention, by closing, the protective member cannot be moved for replacement, and the clean surface of the new protective member is not rubbed and soiled.

According to the 14th invention, by closing, the protective member cannot be moved for replacement, and the clean surface of the new protective member is not rubbed and soiled.

According to the 15th vehicle of the present invention, even when muddy water or the like is splashed up, automatic driving or assisted driving can be safely performed, and safer driving becomes possible.

At least a part of the above-mentioned invention was conceived from the viewpoint as described below.

That is, in the present invention, a plurality of protective members are prepared and replaced when they become dirty. On the other hand, since both the protective member and the window frame portion are often made of a hard material, a large vibration is generated when an automobile or the like runs on a bumpy road, so it is desirable that there is a gap between the protective member and the window frame portion.

By the way, if there is such a gap, at least during sensing, dust and muddy water may invade the inside of the main body through the gap and stain the still clean protective member prepared inside the main body.

Therefore, at least during sensing, it is necessary to devise ways to close the gap. Moreover, by blocking it, it must not be impossible to move for the replacement of the protective member. It is also necessary to prevent the main surface of the clean surface of the new protective member from being rubbed and soiled during replacement by closing it.

### [Simple explanation of drawings]

[FIG. 1] (A), (B) Perspective view of the vehicle according to the embodiment of the present invention.
[FIG. 2] a perspective view of a sensing device according to an embodiment of the present invention.
[FIG. 3] (A), (B) Explanatory drawing 1 for explaining the function of the sensing device.
[FIG. 4] (A), (B), (C) Explanatory drawing 2 for explaining the function of the sensing device.
[FIG. 5] (A) and (B) Explanatory drawing 3 for explaining the function of the sensing device.
[FIG. 6 ] a perspective view of a sensing device according to another embodiment of the present invention.
[FIG. 7] (A), (B), (C) An explanatory diagram for explaining the function of the sensing device according to the embodiment of FIG. 6.
[FIG. 8] a schematic plan view of a sensing device according to another embodiment of the present invention.
[FIG. 9 ](A), (B), (C) Schematic plan view of another embodiment of the present invention.
[FIG. 10] a perspective view of a part of the sensing device according to the embodiment of FIG. 9.
[FIG. 11] (A) is a schematic plan view of another embodiment of the present invention, and (B) is a front view of the same.
[FIG. 12] a schematic plan view of another embodiment of the present invention.
[FIG. 13] a schematic plan view of another embodiment of the present invention.
[FIG. 14] a schematic plan view of another embodiment of the present invention.
[FIG. 15] a schematic plan view of another embodiment of the present invention.
[FIG. 16] a schematic plan view of another embodiment of the present invention.
[FIG. 17] a perspective view of the protective member of FIG. 16.
[FIG. 18] a perspective view of the window frame portion of FIG. 16.
[FIG. 19] a schematic plan view of another embodiment of the present invention.
[FIG. 20] a schematic plan view of another embodiment of the present invention.
[FIG. 21] a perspective view of a protective member according to another embodiment of the present invention.
[FIG. 22] a perspective view of a window frame portion corresponding to the protective member of FIG. 21.
[FIG. 23] a schematic plan view of the protective member and the window frame portion of FIG. 21.
[FIG. 24] another schematic plan view of the protective member and the window frame portion of FIG. 21.
[FIG. 25] a schematic plan view of another embodiment of the present invention.
[FIG. 26] a schematic plan view of another embodiment of the present invention.
[FIG. 27] a schematic plan view of another embodiment of the present invention.
[FIG. 28] a schematic plan view of another embodiment of the present invention.

### BEST MODE FOR CARRYING OUT THE INVENTION

Hereinafter, embodiments of the sensing device of the present invention will be described with reference to the drawings.

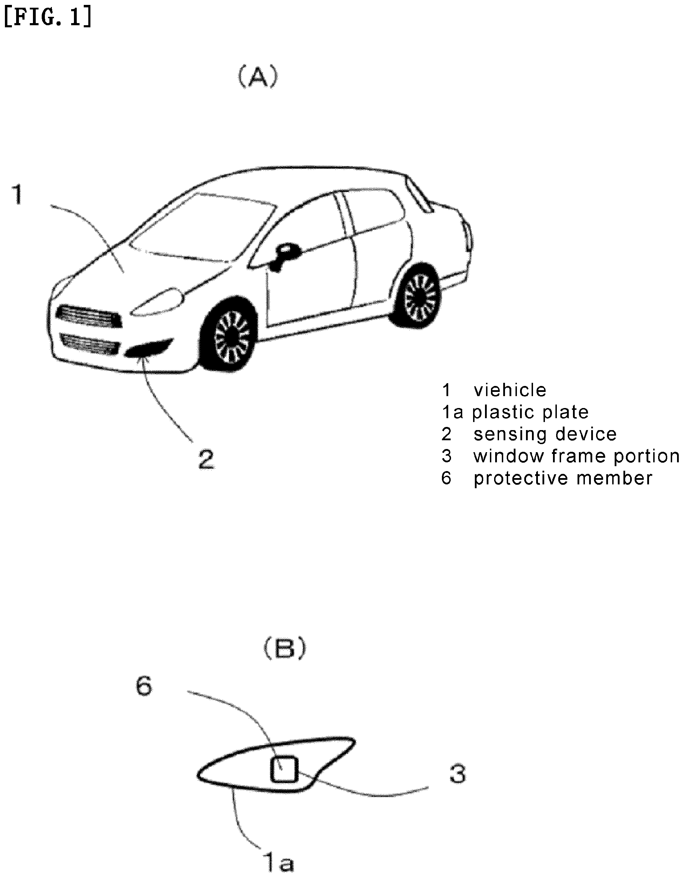

FIG. 1 (A) shows a passenger car which is an example of the main body of the present invention, where 1 is the main body of the passenger car and 2 is a sensing device. FIG. 1(B) is an enlarged view of a portion to which the sensing device 2 is mounted. The window frame portion 3 is formed on the inner edge of the opening formed at a substantially central position of the plastic plate 1a which is a part of the main body 1. The optimum position for forming the window frame portion 3 is selected according to the intended use of each sensing device. That is, the center of the front part of the main body 1, the left and right sides of the front part, the side parts, and the like. Further, a protective member 6 described later is arranged in the window frame portion 3.

### <a case when the rotation center axis J of the protective member 6 moves>

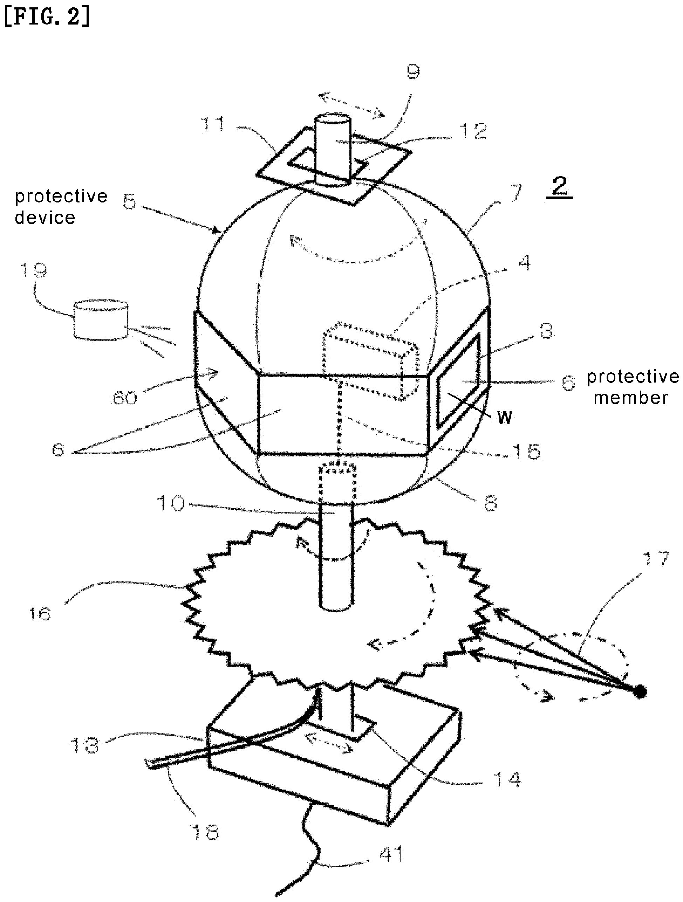

FIG. 2 is a perspective view of the sensing device 2. Reference numeral 3 is the window frame portion provided at the left and right positions on the front side of the automobile main body 1. W is an opening of the window frame portion 3. A sensing device 2 having various sensors 4 is arranged inside the window frame portion 3. The various sensors 4 sense the environment such as external buildings, people, roads, weather, and sunlight through the window frame portion 3, and are optical cameras, LiDAR, radar and ultrasonic sensors that utilize light-receiving images, lasers, microwaves, ultrasonic waves and the like. In the example of the figure, it is an optical camera 4.

The sensing device 2 is provided with a substantially spherical protection device 5, and the protection device 5 is a device for arranging and protecting the sensor 4 inside. The protective device 5 includes a protective member 6. That is, six substantially rectangular protective members 6 are connected to each other in a band shape to form an endless ring. In the example of the figure, it is a hexagon, but it may be a dodecagon or a further polygon. Further, it may be circular as described below. Reference numeral 60 indicates the entire connected protective member. Then, in the entire protective member 60, one protective member 6 which is a part thereof is arranged close to the inside of the window frame portion 3. The shape of the protective member 6 is a curved surface or a flat plate in consideration of refraction of light and the like. Further, the shape of the entire connected protective member 60 is circular (planar view).

Further, a hemisphere upper lid 7 and a hemisphere lower lid 8 are attached to the upper side and the lower side of the entire connected protective member 60. The entire connected protective member 60, the upper lid 7 and the lower lid 8 form a substantially spherical shape. The sensor 4 is built-in and arranged in the substantially spherical shape.

Further, the upper cylindrical rotation shaft 9 is fixed to the apex of the upper lid 7, and the lower cylindrical rotation shaft 10 is fixed to the bottom of the lower lid 8.

The upper end of the upper cylindrical rotation shaft 9 is held rotatably and slidably in a direction perpendicular to the window frame portion 3 by the main body side support wall 11 which is a part of the main body 1 of the car. That is, it is rotatably inserted into the elongated hole opening 12 formed in the main body side support wall 11, and the direction of the elongated hole opening 12 is substantially perpendicular to the window frame portion 3.

On the other hand, the lower end of the lower cylindrical rotating shaft 10 is rotatably supported by the main body side support base 13 which is a part of the main body 1 of the car. That is, it is rotatably and slidably inserted in the elongated hole opening 14 formed in the main body side support base 13, in a direction perpendicular to the window frame portion 3. The direction of the elongated hole opening 14 is also substantially perpendicular to the window frame portion 3 as in the direction of the elongated hole opening 12.

The upper end of the lower cylindrical rotating shaft 10 is fixed to the bottom of the lower lid 8 as described above, but the inside of the cylindrical rotating shaft 10 and the inside of the spherical shape communicate with each other, and a support shaft 15 that supports the sensor 4, and the power cable and communication cable 41 of the sensor 4, pass through the inside of the cylindrical rotating shaft, The lower end of the support shaft 15 is fixedly supported by the main body side support base 13. The thickness of the support shaft 15 is considerably thinner than the inner diameter of the cylindrical rotating shaft, as will be described later.

Further, a leaf spring 18 is provided on the main body 1, the provide position of which is opposite to the window frame portion 3 with respect to the lower cylindrical rotating shaft 10, and the tip of the leaf spring 18 is configured to constantly urge the lower cylindrical rotating shaft 10 to the window frame portion 3.

A gear 16 is fixed to the lower cylindrical rotating shaft 10. A rotary arm 17 is rotatably provided on the main body 1. The tip of the rotary arm 17 is rotatable and is arranged at a position where it is caught by the uneven portion of the gear 16. As a result, the tip is caught by the gear 16 in the state as shown in the figure, and it can rotate the gear 16 clockwise. The detailed situation will be explained below.

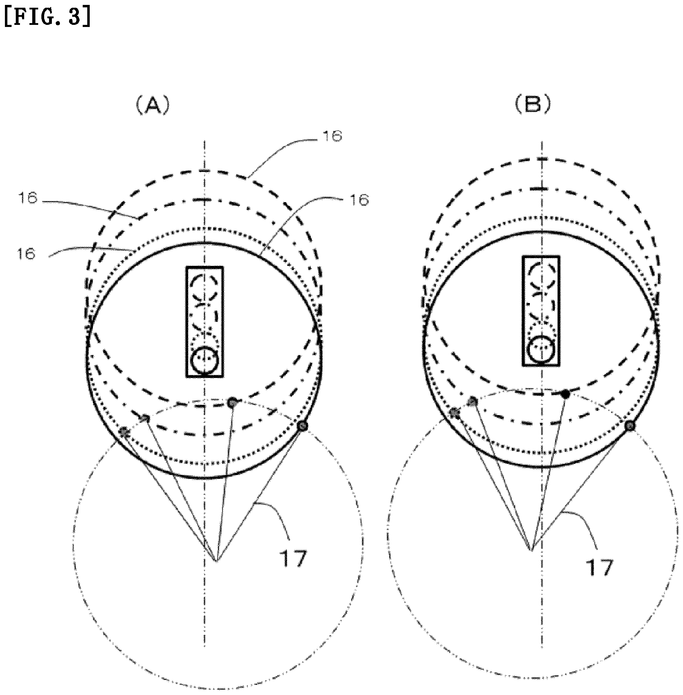

In FIG. 3(A), when the protective member 6 becomes dirty and the sensing function of the sensor 4 deteriorates, or when the sensor 4 should be replaced for other reasons, the control means (not shown) drives the arm 17 according to the replacement command signal. Alternatively, a replacement command may be issued on a regularly. Then, the rotary arm 17 starts to move from the stop position, and at first, the tip of the rotary arm 17 hits the gear 16 shown by solid line, and while rotating the gear 16 in the clockwise direction, pushes it toward the back (in the direction perpendicular to the window frame portion 3) , with resisting the urging force of the leaf spring 18. Further, due to the further rotation of the rotating arm 17, the gear 16 rotates while being pushed as shown by the rough dotted line. Further, due to the further rotation of the rotary arm 17, the gear 16 further rotates while returning as shown by the dash line. That is, as the component force in the pushing direction of the rotary arm 17 becomes weaker and, it starts to return by the urging force of the leaf spring 18. Further, due to the further rotation of the rotating arm 17, the gear 16 further rotates while returning to the place of the fine dotted line. Further, due to the further rotation of the rotating arm 17, the gear 16 rotates while returning to the solid line. After that, the rotary arm 17 separates from the gear 16 and continues to rotate further to reach the initial position and stop.

In response to such movement of the gear 16, the lower cylindrical rotating shaft 10 to which the gear 16 is fixed, and the entire connected protective member 60 fixed to the lower cylindrical rotating shaft 10, rotate clockwise while they move toward the back and move back again.

Note that FIG. 3(A) shows a case where the position of a base of the rotary arm 17 is provided at the right side of the center of the gear 16, and FIG. 3(B) shows a case where the position of the base is provided at the left side of the center of the gear 16. It is easier to transmit the turning power at the exit near place when the gear 16 is provided at the left side.

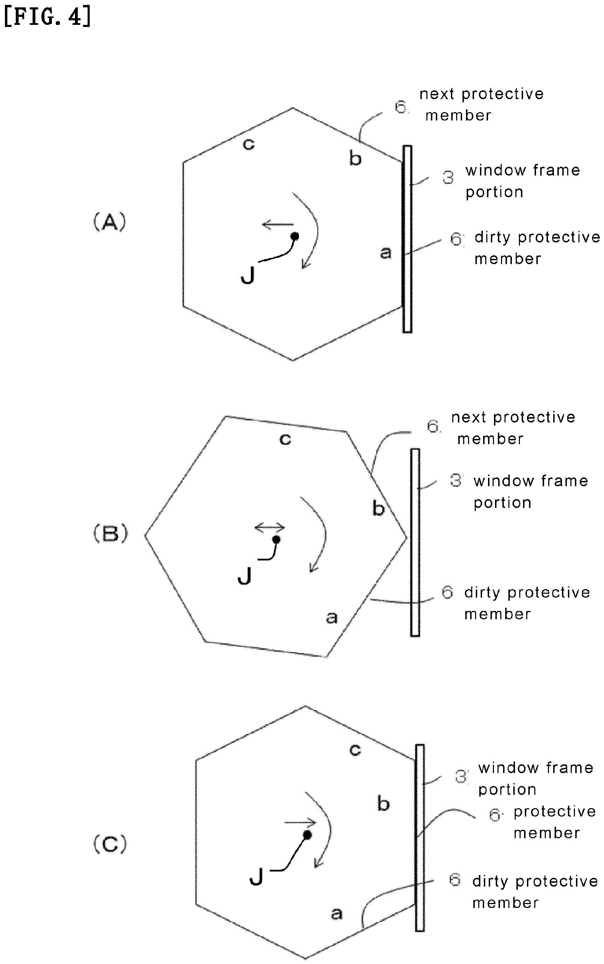

In response to the above-mentioned rotational operation of the rotating arm 17, the entire 60 of the connected protective member 6 rotates and goes back while being separated from the window frame portion 3, and further rotates while approaching the window frame portion 3 with keeping a distance and finally abuts on it. According to the series of the operations, the entire 60 of the protective member 6 rotates a certain distance, and the dirty protective member 6 which has been in contact with the window frame portion 3 until then, moves away from the window frame portion 3, and at the same time, a new next protective member 6 approaches the window frame portion 3 and comes into contact with the window frame portion 3, thereby replaced. FIG. 4 shows the operation. In FIG. 4, J indicates a rotation center axis in the rotation operation of the entire 60 of the protective member 6. In this way, when the protective member 6 goes back and moved and arranged, the rotation center axis J in the rotational operation of the entire 60 of the protective member 6 moves away from the window frame portion 3 and approaches the original position again.

When the protective member 6 rotates so that the protective member 6 is replaced in this way, it is avoided as much as possible that the protective member 6 rotates while being in contact with the window frame portion 3. As a result because at least the newly supplied protective member 6 is not replaced while being rubbed by the window frame portion 3, there is no concern that the new protective member 6 will be soiled by the dirty window frame portion 3.

The gear 16 is not necessarily limited to a normal gear, and may be a boneshaped member of an umbrella, for example, as long as it has a shape in which the rotary arm 17 is caught and moved.

Then, as shown in FIG. 2, after the dirty protective member 6 turns to the back, it is washed and dried at the washing (drying) machine 19 and waits for replacement as a new protective member 6. Since it is desirable to clean before the dirt is fixed to the protective member 6 and in order to secure a sufficient time for natural drying, the cleaning position is desirable to be immediately after the dirty protective member 6 turns back. In other words, the next time to go back and rotate may be after a considerable amount of time has passed, so it is desirable to wash immediately after going back and rotating. The drawing is drawn in the back position for easy understanding. In addition, it is desirable that the position of the dryer is such that it can be dried earlier.

As a result, immediately after the protective member 6 becomes dirty and unusable, a new next protective member 6 can be supplied, so that sensing is not interrupted due to washing or drying. This contributes to the safety of automobile automation.

Further, since the sensor 4 is arranged inside the spherical protection device 5, there is no concern that the washing liquid or the drying air from the washing (drying) machine 19 will be applied to the sensor 4, so that the electronic parts of the sensor 4 may be not damaged. There is no need to worry, so there is a high degree of selection freedom in its strength and material.

Further, by designing the support shaft 15 that supports the sensor 4 to be sufficiently thin, even if the lower cylindrical rotation shaft 10 moves back and forth, there is no concern that the cylindrical rotating shaft will collide with the support shaft 15. This eliminates the need to move the support shafts 15 at the same time and simplifies the structure.

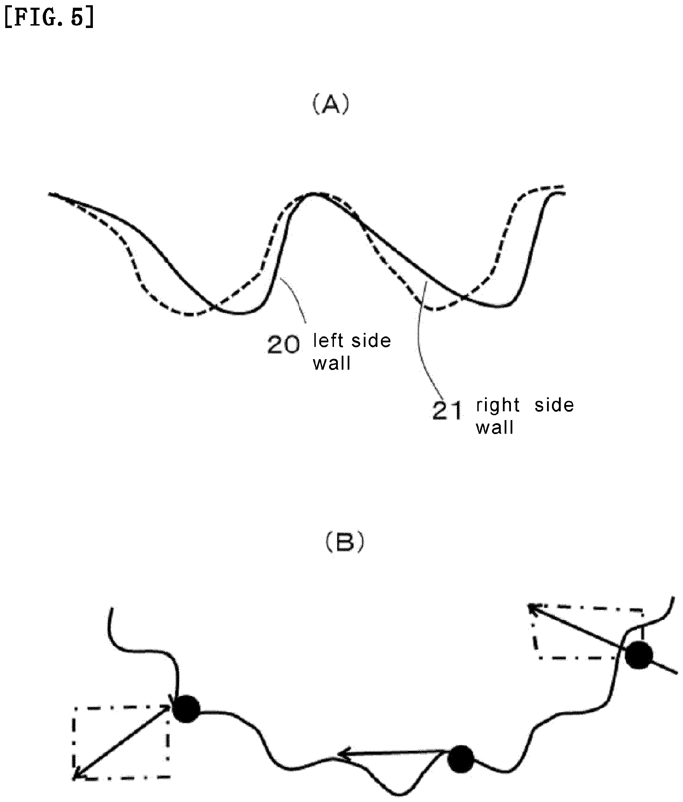

Next, the uneven shape of the peripheral edge of the gear 16 and the shape of the rotary arm 17 will be described. As shown in FIG. 5(A), when the gear 16 is rotated in the clockwise direction, the rotating arm 17 is hooked from the diagonally lower right side of the drawing to rotate. And in order to improve the hooking and increase the rotation angle range, it is desirable that the uneven left side wall 20 stands up more and the right side wall 21 does not stand up more not to interfere with the rotation of the rotating arm 17. The dotted line indicates the case where the left and right walls are evenly inclined. Note that FIG. 5(B) shows the action direction and component force of the rotary arm 17.

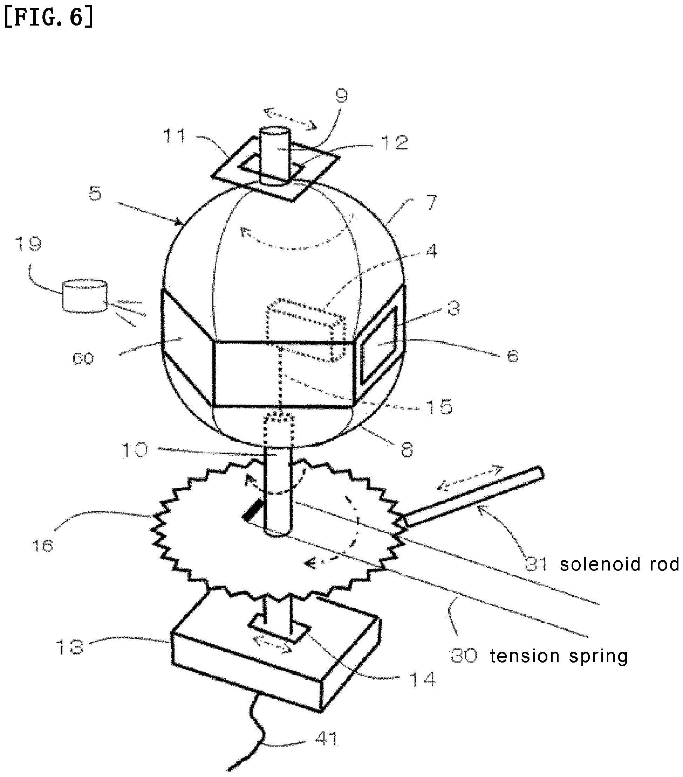

FIG. 6 is another embodiment of the present invention. The different points from the above-described embodiment are such that the means for urging the gear 16 toward the window frame portion 3 is the tension spring 30, and the means for rotating the gear 16 is the solenoid rod 31.

That is, the tension spring 30 constantly urges the lower cylindrical rotating shaft 10 in the direction of the window frame portion 3. Further, the solenoid rod 31 is such means for pushing the unevenness of the gear 16 by a reciprocating motion at the tip thereof, to rotate and push by a predetermined distance the gear 16 to the side opposite to the window frame portion 3.

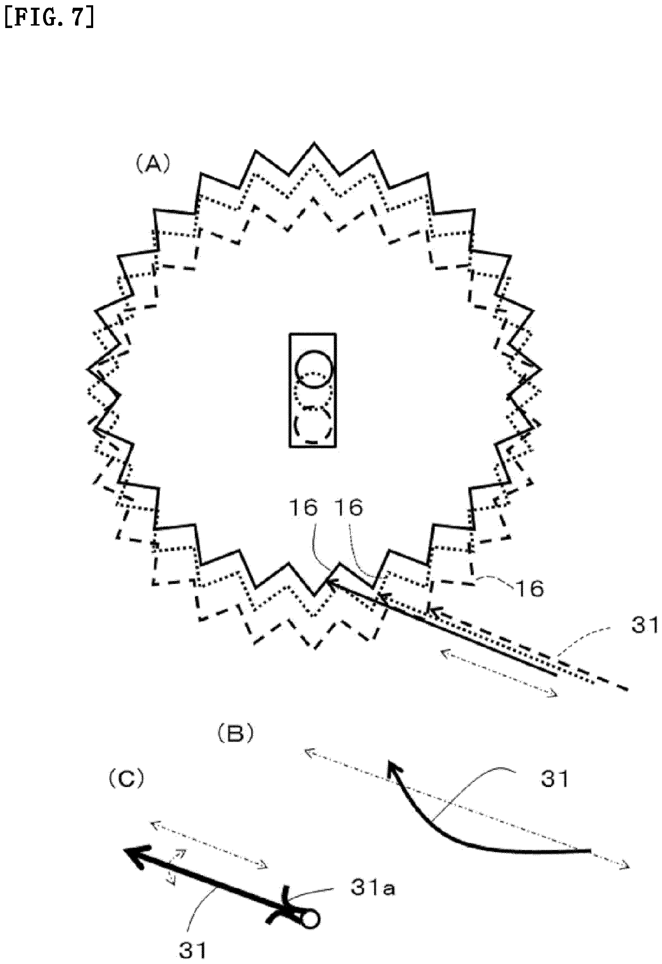

As shown in FIG. 7(A), when the solenoid rod 31 is located on the rough dotted line, the gear 16 is also located on the rough dotted line, and then when the solenoid rod 31 is pushed in slightly and pushed into the fine dotted line position, the gear 16 is pushed and rotated on the fine dotted line. Further, when the solenoid rod 31 is pushed to the solid line, the gear 16 also rotates while being pushed to the state of the solid line.

After that, when the solenoid rod 1 evacuated, the rotation of the gear 16 is stopped at the same position, and the gear 16 moves to the window frame portion 3 side by the force of the tension spring 30. In this way, due to the reciprocating operation of the solenoid rod 31, the protective member 6 rotates while being separated from the window frame portion 3, and comes into contact with the window frame portion 3 again while reducing the distance.

As shown in FIG. 7(B), the shape of the solenoid rod 31 itself may be curved downward, whereby the unevenness of the gear 16 is less likely to interfere with the reciprocating movement of the solenoid rod 31.

Further, as shown in FIG. 7(C)), the root portion of the solenoid rod 31 may be rotatable so that the solenoid rod 31 swings to the left or right to some extent. By arranging the leaf spring 31a at the root portion, it returns naturally. In this case as well, the effect of widening the rotation range of the gear 16 as much as possible can be expected.

Of course, the separation/approach and rotation of the protective member 6 with respect to the window frame portion 3 can be realized by different means of one means for the separation/approach and another means for rotation.

In this case, the protective member 6 or the window frame portion 3 may be provided with a shielding member as a cushioning means or as a means for closing the gap (not shown).

### <When the window frame portion 3 side, moves>

Next, a case where the window frame portion 3 moves against to the rotation center axis J in the rotational operation of the entire 60 of the protective member 6, will be described. In this case, the protective member 6 only rotates with respect to the main body 1, and the window frame portion 3 moves against the main body 1.

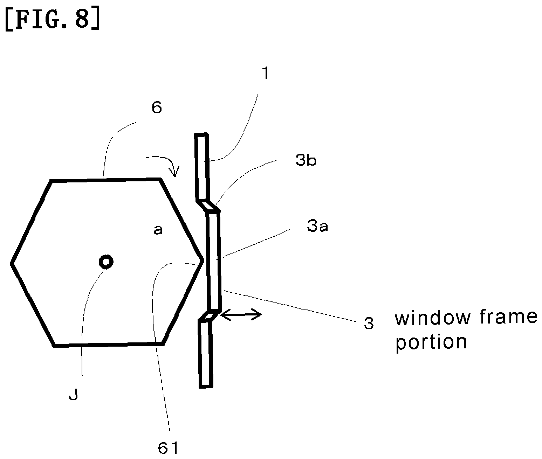

In the embodiment shown in FIG. 8, the window frame portion 3 is composed of a window frame portion main body 3a and an elastic body 3b formed around the window frame portion main body 3, and the window frame portion main body 3a is connected to the main body 1 via the elastic body 3b.

As shown in FIG. 8, when one piece (a) of the protective member 6 rotates, its corner portion 61 hits the window frame portion main body 3a and pushes it outward against the urging force of the elastic body 3b. When the protective member 6 further rotates and comes to the sensing position (not shown), the corner portion 61 evacuats, so that the window frame portion main body 3a also returns to the original position by the urging force of the elastic body 3b. By doing so, during sensing, the protective member 6 and the window frame portion main body 3a are in close contact with each other, and it is possible to prevent dust and the like from entering the main body 1.

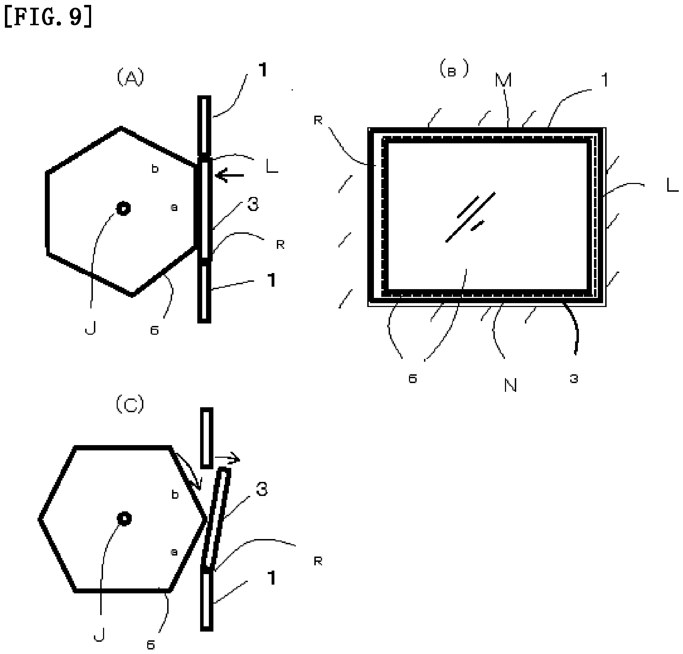

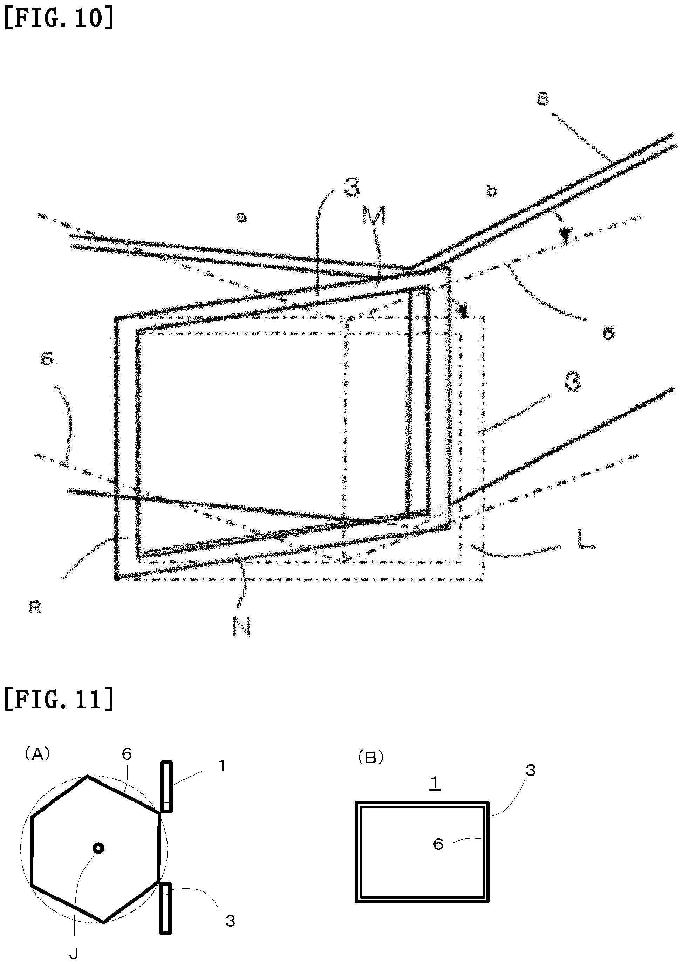

FIGs. 9 and 10 are different embodiments. As shown in FIGs. 9A and 9B, in this embodiment, a window frame portion 3 which is a substantially rectangular frame is fitted into a rectangular opening formed in the main body 1. The vertical bar R of the frame portion 3 at the rotation destination side with respect to the rotation direction of the protective member 6, has a hinge structure and it is connected to the main body 1. The vertical bar L at the rotation source side and the upper and lower bars M and N Is free. Further, the vertical bar L at the rotation source side is always urged as shown the arrow to the protective member 6 side, by means of urging means (not shown). with the vertical bar R as the center.

In such a structure, in the case shown in FIG. 9A, one piece (a) of the protective member 6 is in close contact with the window frame portion 3 during sensing, but as shown in FIG. 9C, when the protective member 6 rotates to replace next one piece (b), the corner portion 61 hits the window frame portion 3 and turns the window frame portion 3 around the vertical bar R, to protrude. And as the corner portion 61 further rotates, the vertical bar L at the rotation source side returns to the sensing position by the urging means. FIG. 10 is a perspective view showing the motion state.

In this case, since the vertical bar L at the rotation source side opens to the outside, there is no concern that the next piece (b) will be rubbed by the presence of the vertical bar L, and it will not get dirty. The vertical bar L side, may have a hinge structure (not shown).

In this case, the protective member 6 or the window frame portion 3 may be provided with a shielding member as a cushioning means or as a means for closing the gap (not shown).

### <When neither the window frame portion 3 side, nor the rotation center axis J side in the rotation operation of the entire 60 of the protective member 6, moves>

Next, such cases are described that when the protective member 6 is evacuated(goes back) and moved, and even during the sensing, the rotation center axis J in the rotational operation of the entire 60 of the protective member 6 is not separated from and does not approach the window frame portion 3, and when the protective member 6 is evacuated (goes back) and moved, and even during the sensing, the window frame portion 3 is not separated from and does not approach the rotation center axis J in the rotational operation of the entire 60 of the protective member 6. That is, the entire 60 of the protective member 6 is only rotated with respect to the main body 1, and the window frame portion 3 is not moved with respect to the main body 1.
1. As one embodiment, it is such case where sensing is performed while leaving a gap between the protective member 6 and the window frame portion 3. In such a case, dust and muddy water may enter, so there is a concern that the surface of the new next protective member 6 will become dirty. Therefore, it is desirable to design the gap as narrow as possible.

FIG. 11 shows an example in that case. In this case, the edge itself of the opening formed in the main body 1 may be used as the window frame portion. FIG. 11A is a plan view, and FIG. 11B is a front view. The protective member 6 may be a flat plate or a curved plate.

2. As another embodiment, it is possible to provide a shielding member 50 that closes the gap generated between the protective member 6 and the window frame portion 3 during sensing.

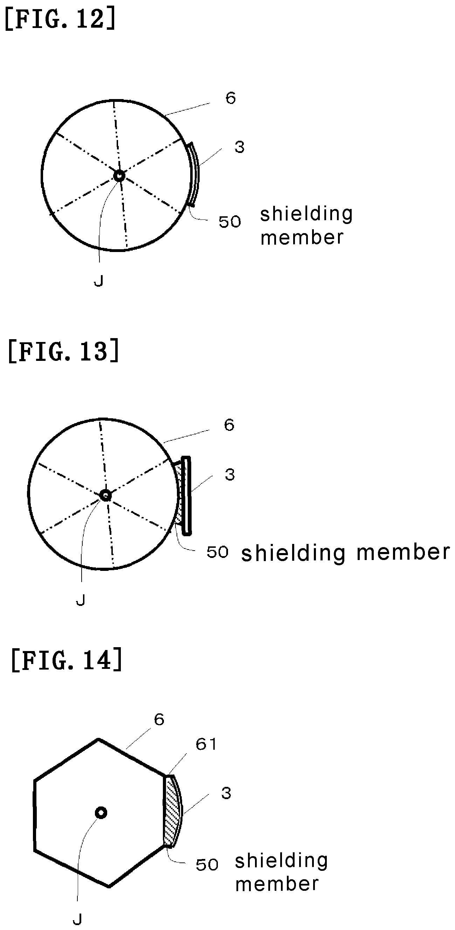

2-1 As an example thereof, a case where the shielding member 50 is attached to the window frame portion 3 side, will be described with reference to FIGs. 12 to 15. In such a case, it is only necessary to provide the shielding member 50 at one place of the window frame portion 3 side and there is an advantage that the structure can be simplified.

FIG. 12 shows a case where the protective member 6 side is a curved plate and the window frame portion 3 side, is a curved frame. In this case, a shielding member 50 having a shape capable of closing the gap generated during sensing (the horizontal portion of the upper and lower positions is curved and the vertical portion of the left and right positions is linear) is provided. However, when the protective member 6 rotates and is replaced, the surface of the new protective member 6 continues to be rubbed by the vertical portion of the shielding member 50. Usually, dust and the like are often collected in the corners of the shielding member 50, so there is a concern that the new protective member 6 may become dirty when replaced.

Here, the meaning of the case when the protective member 6 is a curved plate, it has an arcuate cylindrical shape in a plan view, and the meaning of the case when the window frame portion 3 is a curved frame, the bar members at the upper and lower positions thereof are curved in a plan view. The vertical bar is straight. A flat frame is a straight line in a plan view.

In the sense of closing the gap, it is important whether the shape of the shielding member 50 at the protective member 6 side, is a curved surface or a flat surface, regardless of the shape of the window frame portion 3. Whatever the shape of the window frame portion 3 (for example, wavy) it is, it is enough that the shape of the shielding member 50 at the window frame portion 3 side, may be suitable (wavy) .

FIG. 13 shows a case where the protective member 6 side is a curved plate and the window frame portion 3 side is a flat frame. This flat frame is a straight line in a plan view. The vertical bar is straight. Also in this case, the shielding member 50 having a shape capable of closing the gap generated during sensing is provided. The shape of the vertical portion of the shielding member 50 is a curved surface, and the shape of the left and right vertical portions is linear. However, when the protective member 6 rotates and is replaced, a new surface of the next protective member 6 tends to continue to be rubbed by the vertical portion of the shielding member 50. it is not desirable.

FIG. 14 shows a case where the protective member 6 side is a flat plate and the window frame portion 3 side is a curved frame. Also in this case, the shielding member 50 having a shape (straight in both the upper and lower sides and the left and right) that can close the gap generated during sensing is provided (note that the joint portion between the window frame portion 3 and the shielding member 50 is curved at each upper and lower positions). In this case, when the protective member 6 rotates and is replaced, there is a problem that the protective member 6 collides with the upper and lower portions of the shielding member 50 and cannot rotate. As a countermeasure, the material of the shielding member 50 is made of a flexible elastic body to alleviate the collision, and the diameter of the entire 60 of the protective member 6 is increased so that the corner portion 61 does not protrude much to the outside when it is rotated. It is possible to design as such.

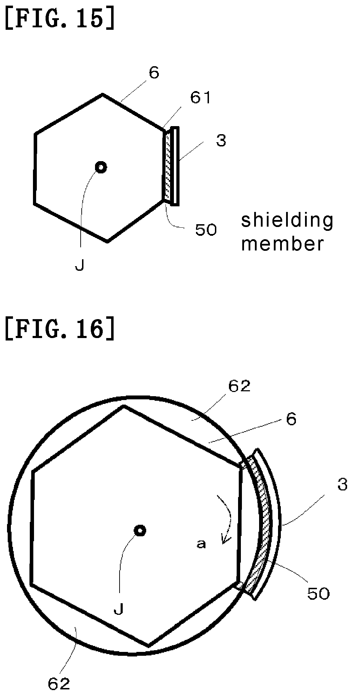

FIG. 15 shows a case where the protective member 6 side is a flat plate and the window frame portion 3 side is a flat frame. In this case as well, the shielding member 50 having a shape capable of closing the gap generated during sensing is provided (the joint portion between the window frame portion 3 and the shielding member 50 is linear even at the upper and lower positions). Also in this case, when the protective member 6 rotates and is replaced, the protective member 6 collides with the upper and lower portions of the shielding member 50 and cannot rotate.

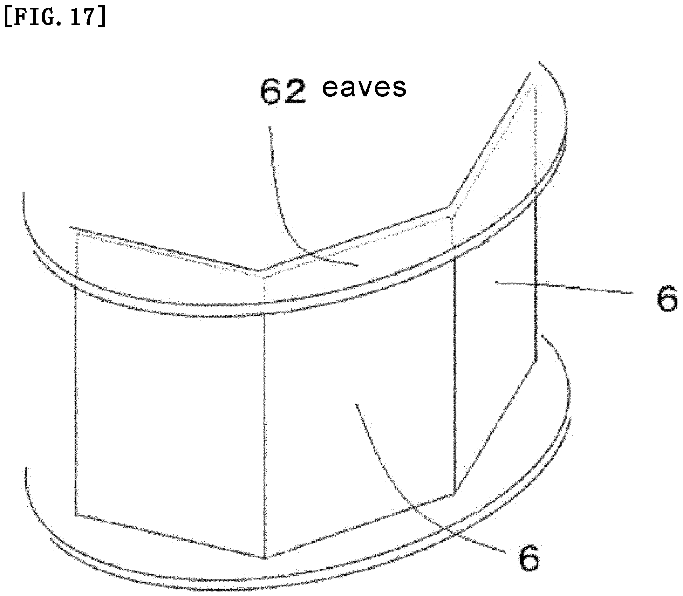

FIG. 16, FIG. 17 and FIG. 18 are different modifications, in which the shielding member 50 is provided on the window frame portion 3 side, while the eaves 62 are provided on the protective member 6 side.

That is, in this embodiment, the protective member 6 is a flat plate, but arc-shaped eaves 62 are provided above and below the protective member 6. It may be the same material as the protective member 6, or it may be a different material.

On the other hand, the upper and lower bars (M, N) of the window frame portion 3 are curved frames. Then, the shielding member 50 is fixed to the window frame portion 3. The upper and lower portions 50a of the shielding member 50 are also curved. This curved surface has an arc shape corresponding to the rotation of the eaves 62. Therefore, there is no concern that the eaves 62 collides with the shielding member 50. As described above, the shape of the window frame portion 3 at the shielding member 50 side, is not essential, and the shape of the shielding member 50 at the protection member 6 side is important. That is, the window frame portion 3 itself can be a flat frame, and the portions 50a at the upper and lower positions of the shielding member 50 may have a curved surface shape.

Further, the left and right bars (R, L) of the window frame portion 3 are straight, and further, the vertical portions 50b at the left and right positions of the rectangular shielding member 50 project toward the protective member 6 side, respectively.

During sensing, the gap between the protective member 6 and the window frame portion 3 is closed by the eaves 62 and the upper and lower portions 50a of the shielding member 50 as to the upper and lower positions. And the gap is closed by the left and right of the protective member 6 and the left and right portions 50b of the shielding member 50 as to the left and right positions. Therefore there is no concern that dust and muddy water will invade the inside and contaminate the new next protective member 6.

Further, at the time of replacement of the protective member 6, since the protective member 6 is a flat plate, there is no need to worry about continuing rubbing against the left and right portions 50b of the shielding member 50.

The eaves 62 can also be used as a part of the shielding member 50. As will be described later, this is an example in which a part of the shielding member 50 is provided on the protective member 6 side and the remaining part is provided on the window frame portion 3 side.

In the examples of FIGs. 16, 17, and 18, the following excellent effects can be exhibited. That is, since a car or the like originally receives a large vibration when traveling on a bumpy road and both the protective member 6 and the window frame portion 3 are often made of a hard material, it is necessary to positively provide a gap between them. On the other hand, if there is a gap, at least during sensing, dust or muddy water may invade inward through the gap and contaminate the next clean protective member 6, so it is necessary to close it with the shielding member 50. However, depending on the shape of the protective member 6 or the shape of the shielding member 50 or to which one is attached, there is a concern that the protective member 6 cannot be rotated in the first place, or even if it can be rotated, the protective member 6 will continue to be rubbed by the shielding member 50 and become dirty. The examples of FIGS. 16, 17, and 18 have an excellent effect of overcoming these problems.

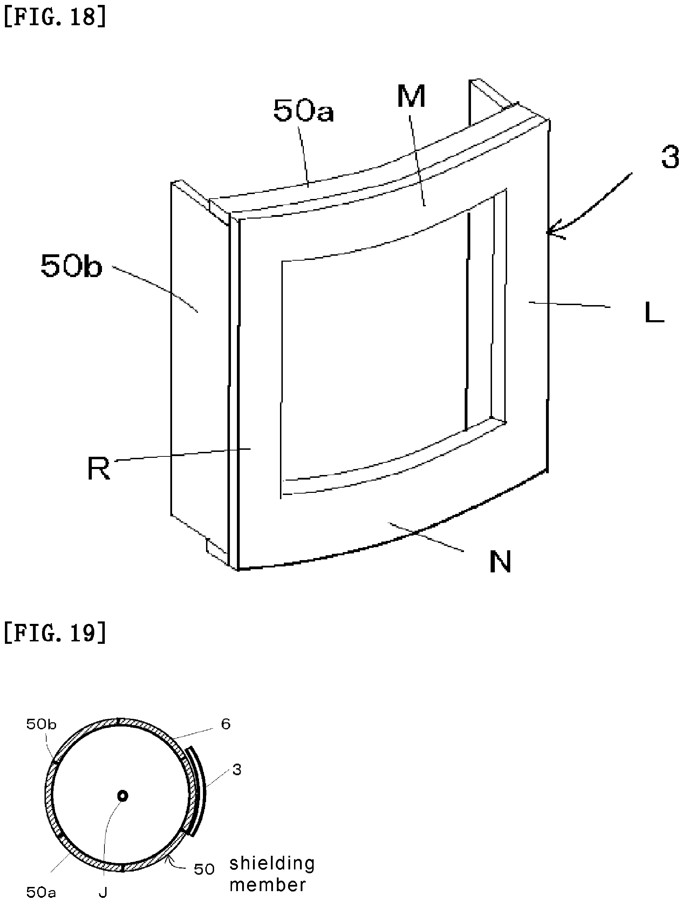

### 2-2 The case where the shielding member is attached to the protective member 6 side will be described with reference to FIGs. 19 to 27.

FIG. 19 shows a case where the protective member 6 is a curved plate and the window frame portion 3 is a curved frame. In this case, the shielding member 50 is attached to the side of the protective member 6, ad the portions 50a at the upper and lower positions thereof are provided above and below the protective member 6, and the portions 50b at the left and right positions of the shielding member 50 are provided at the left and right portions of the protective member 6. The upper and lower shielding members 50a are circular, and the left and right shielding members 50b are straight members in the vertical direction.

In this case, since the shielding member 50 is attached to the protective member 6 side, there is no concern that the new protective member 6 will be contaminated by the shielding member 50 when the protective member 6 is replaced, and the rotation of the protective member 6 will be interfered.

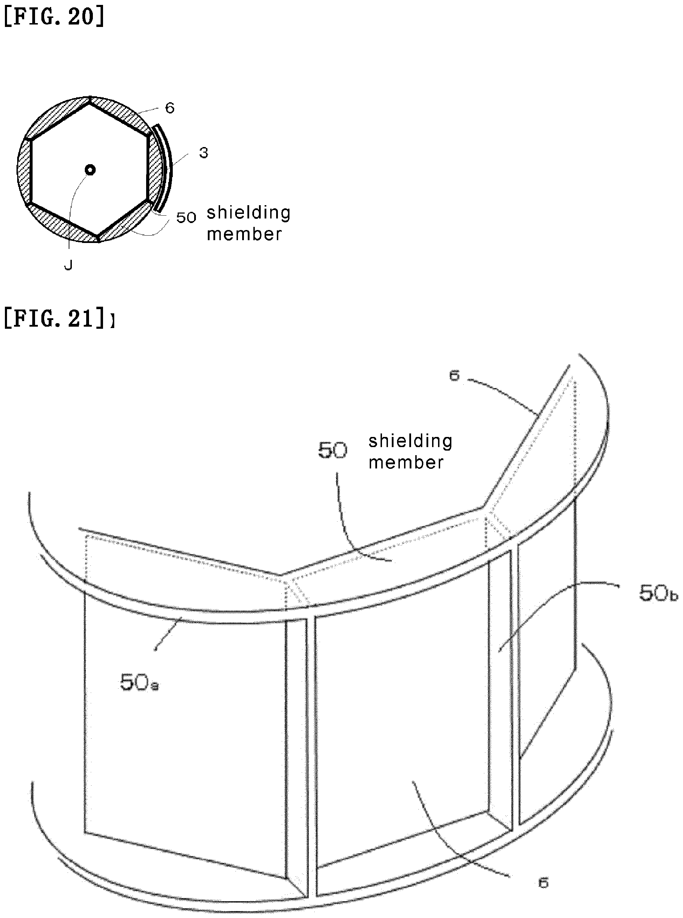

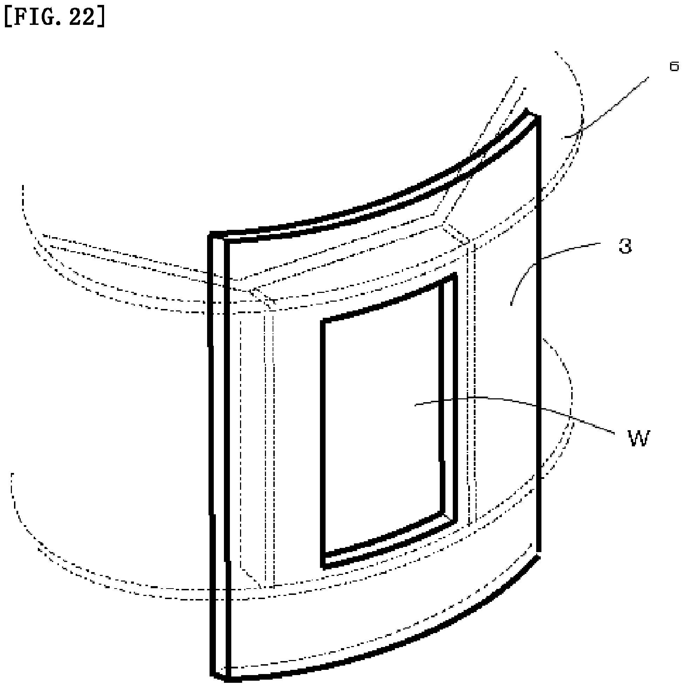

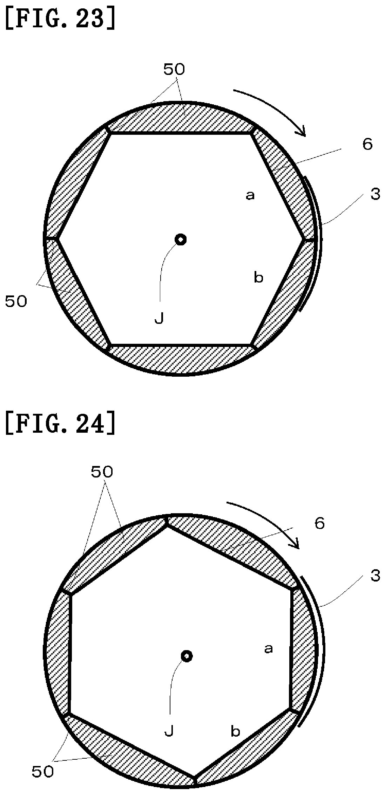

FIG. 20 shows a case where the protective member 6 is a flat plate and the window frame portion 3 is a curved frame. FIG. 21 is a perspective view of the protective member 6. FIG. 22 is a perspective view in which the protective member 6 is combined with the window frame portion 3. W is an opening of the window frame portion 3. The upper and lower portions of the shielding members 50a have a substantially circular shape, and the left and right portions of the shielding members 50b have a straight rectangular shape in the vertical direction. In FIG. 23, since the protective member 6 (b) becomes dirty, it is about to be replaced with a new protective member 6 (a). FIG. 24 shows the completed state. Sensing is performed in this state. In order to make the drawing easier to look, the space between the shielding member 50 and the window frame portion 3 is drawn with a slight gap, but in reality, sensing is performed in close contact with each other, and there is no concern that dust or muddy water will invade.

In this case as well, there is no concern that the new protective member 6 will be contaminated by the shielding member 50 when the protective member 6 is replaced, and there is no concern that the rotation of the protective member 6 will be hindered.

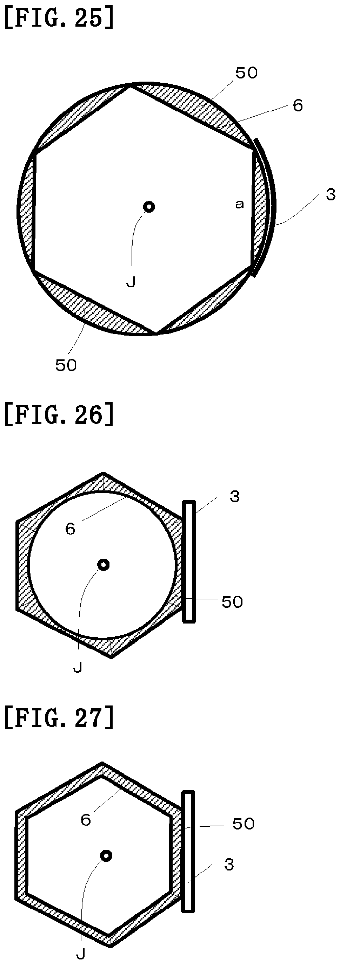

As shown in FIG. 25, it is desirable to make the vertical portion of the shielding member 50 at the left and right positions as small as possible.

The examples shown in FIGs. 20 to 25 are merely examples of the present invention. That is, they are merely examples of such invention that the protective member 6 can take a sensing position state and an replacing moving state (moving state) with respect to the window frame portion 3, and the main surface of the protective surface of the newly moving protective member 6 (here, the main surface means the central portion which is necessary for sensing, of the protective surface of the protective member 6) does not come into contact with the window frame portion 3 even in the replacement movement operation. For example, the replacing movement state (movement state) may be a rotational movement, a linear movement state, or an example incorporating a part of the configuration of other embodiments of the present specification. Further, the main surface of the dirty protective member 6 to be evacuated may come into contact with the window frame portion 3 during the evacuating movement, but it is desirable that the main surface does not come into contact with the window frame portion 3 if possible.

The sensing position state is a stationary state during sensing, in which the main surface of the protective member 6 faces the window frame portion 3 and the gap between the protective member 6 and the window frame portion 3 is shielded by the shielding member 50 and sealed so that dust and the like do not enter the inside from the outside.

FIG. 26 shows a case where the protective member 6 is a curved plate and the window frame portion 3 is a flat frame. The shielding member 50 is shaped to close the gap, but in this case, the shielding member at the upper and lower positions of the protective member 6 collides with the upper and lower bars of the window frame portion 3, and the shield member 50 cannot rotate.

FIG. 27 shows a case where the protective member 6 is a flat plate and the window frame portion 3 is (clerical error) a flat frame. In this case as well, the shielding member 50 is shaped to close the gap, but in this case as well, the shielding members at the upper and lower positions of the protective member 6 collide with the upper and lower bars of the window frame portion 3 and cannot rotate.

2-3 It is also possible to provide a part of the shielding member 50 to the protective member 6 side, and the remaining part to the window frame portion 3 side.

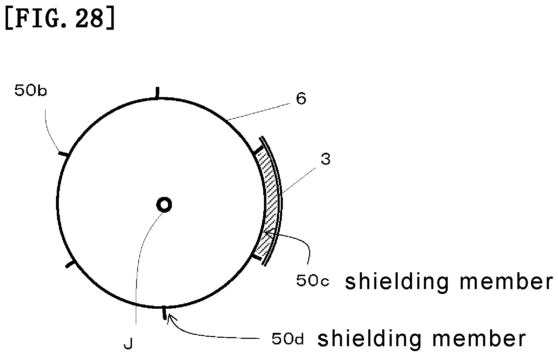

For example, as shown in FIG. 28, the protective member 6 is a curved plate, arc-shaped shielding members 50c are provided at the vertical positions on the window frame portion 3 side, and vertical shielding members 50d can be provided at the left and right positions on the protective member 6 side.

In this case, since the vertical shielding member 50d is provided at the left and right positions on the protective member 6 side, there is no need to worry about rubbing the protective member 6. Further, since the protective member 6 is a curved plate and the portions 50c at the upper and lower positions of the shielding member 50 also have an arcuate shape corresponding to the shape, there is no concern that dust or the like will invade during sensing. There is no concern that the protective member 6 will collide with the upper and lower portions 50c of the shielding member 50 and cannot rotate.

Generally, the material of the shielding member 50 is freedom of choice, but it is desirable to have some elastic force. Further, the shielding member 60 may be formed by preparing an independent member and joining it to another member, but it can also be integrally molded with the other member.

Further, when the protective member 6 is a curved plate, it is desirable to arrange the element of the sensor 4 at the center of the entire 60 of the protective member 6 in order to avoid the influence of refraction and the like.

Further, it is desirable that the frame for holding the sensing device 2 is fixed to the portion of the vehicle body 1 on which the window frame portion 3 is formed. Since automobiles and the like vibrate violently, it is desirable that fluctuations of the relative distance between the sensing device 2, that is, the protective member 6 and the window frame portion 3 can be suppressed as much as possible while the vibration.

In order to detect the dirt on the protective member 6 and determine the replacement, two cameras are prepared and three-dimensional images are taken in the case of capturing an optical image, and for example, It is desirable to determine whether it is a black object inside the scenery or a stain on the protective member 6.

In addition, when light, radio waves, or ultrasonic waves are transmitted and their reflection is taken and sensed, the time interval between the transmission and reflection is used to identify whether the protective member 6 is dirty or there is reflection from the environment.

The window frame portion of the present invention is preferably a window frame member prepared as a separate member and installed by being fitted into the main body, but the edge itself of the opening formed in the main body is used as the window frame portion. May be good.

The shape of the window frame is not limited to a rectangle, but may be circular. In that case, the shape of the protective member shall be the corresponding shape.

In the above embodiment, the protective member was replaced when it became dirty, but it may be replaced periodically.

Further, although the plurality of protective members connected endlessly are in the horizontal direction in the above embodiment, they may be connected in the vertical direction or the diagonal direction depending on in some cases.

Also, the replacement of the protective member may be a linear movement instead of a rotational movement. The replacement may be performed by linearly moving the long protective members connected in a straight line.

Further, the film winder may be arranged on the left and right, and the connected film-like protective members may be replaced one after another by the winding action of the winder.

Further, the protective member is such a member that may be contaminated by wind and rain, and is not necessarily such a member located immediately in front of the sensor. Other members such as a transparent plate may be placed immediately in front of the sensor.

### [Industrial applicability]

According to the sensing device of the present invention, there is an effect that the sensing function is not interrupted even if the protective member becomes dirty, and it is useful as a semi-automatic or fully automatic vehicle sensing device.

### [Explanation of code]

1 Main body (vehicle)
2 Sensing device
3 Window frame portion
4 Sensor
5 Protection device
6 Protective material
60 entire connected protective member
7 Upper lid
8 Lower lid
9 Upper cylindrical rotation shaft
10 Lower cylindrical rotating shaft
11 Main body side support wall
12 Opening
13 Main body side support base
14 Opening
15 Support shaft
16 gears
17 Rotary arm
18 Leaf spring
19 Washing (drying) machine
20 Left side wall
21 Right side wall
30 Tension spring
31 Solenoid rod
50, 50a, 50b, 50c, 50d Shielding member
61 corner
62 Eaves
J Rotation center axis
R, L, M, N frame bar
W window

## Claims

1. A sensing device having a sensor that senses the external environment through a window frame portion provided at a predetermined position of a main body of a vehicle or the like, wherein
a plurality of protective members are provided to protect the sensor,
at least one of the plurality of protective members is arranged at the window frame portion,
the sensor is placed inside the protective member at the window frame portion, to be protected,
the protective member placed at the window frame portion is evacuated from the window frame portion when it becomes dirty or periodically, and instead of it another new protective member moves to the window frame portion,
the protective member that has been evacuated is washed by a washing machine to be available again.

2. the sensing device according to claim 1, wherein
In a sensing position state in which at least one of the plurality of protective members is arranged at the window frame portion, a main surface of the arranged protective member faces the window W of the window frame portion, and a gap between the arranged protective member and the window frame portion is shielded by a shielding member to be sealed so that dust and the like do not enter from the outside,
at least a main surface of the protective surface of the new other protective member may not come into contact with the window frame portion when it comes to the window frame portion in order that it is moved and arranged at the window frame portion.

3. The sensing device according to claim 2, wherein
the shielding member is attached to the protective member side.

4. The sensing device according to claim 1, wherein
the evacuation from the window frame portion and the movement to the window frame portion are realized in such a manner that the plurality of protective members are endlessly connected to each other horizontally, vertically, or diagonally, and the entire connected protective member rotates.

5. The sensing device according to claim 4, wherein
the evacuation of the protective member arranged at the window frame portion is performed by the rotational operation of the entire protective member,
the movement arrangement of the next new protective member to the window frame portion is performed by the rotational operation of the entire protective member,
when the protective member is evacuated and moved to be arranged, the rotation center axis in the rotational operation of the entire connected protective member, moves away from the window frame portion fixed to the main body of the vehicle or the like, and returns to the original position with approaching,
when sensing, the protective member is in close contact with the window frame portion.

6. The sensing device according to claim 5, wherein
the entire connected protective member constitutes a part of a substantially spherical protective device,
the sensor is arranged in the spherical protective device, and
by the rotation of the spherical protective device, a plurality of the protective members are replaced sequentially.

7. The sensing device according to claim 6, wherein
an urging means for urging the spherical protective device toward the window frame portion, is provided,
a gear is attached to a rotating shaft of the spherical protective device, and by moving the gear with a solenoid rod or a tip of the rotating arm, the rotating shaft is evacuated in a direction away from the window frame portion and approaches to the window frame portion again, while being rotated by a predetermined angle, so that the evacuation and movement to be arranged of the protective member against the window frame portion, is realized.

8. The sensing device according to claim 4, wherein
the evacuation of the protective member arranged at the window frame portion is performed by the rotational operation of the entire protective member,
the movement arrangement of the next new protective member to the window frame portion is performed by the rotational operation of the entire protective member,
when the protective member is evacuated and moved to be arranged, the window frame portion is separated and moved from the rotation center axis in the entire rotational operation of the protective member, the axis being fixed to the main body of the vehicle or the like, and the window frame portion returns again to the original position with approaching,
when sensing, the window frame member is in close contact with the protective member.

9. The sensing device according to claim 4, wherein
the evacuation of the protective member arranged at the window frame portion is performed by the rotational operation of the entire protective member,
the movement arrangement of the next new protective member to the window frame portion is performed by the rotational operation of the entire protective member,
when the protective member is evacuated and moved to be arranged and when during the sensing, the rotation center axis in the entire rotational operation of the protective member does not separate or move closer against the window frame portion, and
when the protective member is evacuated and moved to be arranged and when during the sensing, the window frame portion does not separate or move closer against the rotation center axis in the entire rotational operation of the protective member.

10. The sensing device according to claim 9, wherein
the protective member is a flat plate or a curved plate, and the window frame portion is a flat frame or a curved frame.

11. The sensing device according to claim 9, wherein
a gap generated between the protective member and the window frame portion during the sensing, is shielded by a shielding member provided on the protective member side, or provided on the window frame portion side, or both sides.

12. The sensing device according to claim 11, wherein
the window frame portion is a curved frame having an arc shape that is convex outward corresponding to the rotational operation of the protective member,
the shielding member is provided on the protective member side.

13. The sensing device according to claim 11, wherein
the protective member is a flat plate,
the shielding member is provided on the window frame portion side,
left and right portions of the shielding member are provided at left and right positions on the window frame portion side, and
upper and lower portions of the shielding member are provided at the upper and lower positions of the window frame portion side respectively,
the upper and lower positions of the shielding member have an outwardly convex arc shape corresponding to the rotational movement of the protective member, and
at the upper and lower portions of the protective member, an arc-shaped eaves corresponding to the arc-shaped shape of the shielding member, are formed.

14. The sensing device according to claim 11, wherein
the protective member is a curved plate, and
an arc-shaped shielding member is provided at the upper and lower positions on the window frame portion side, and
a vertical shielding member is provided at the left and right positions on the protective member side.

15. A vehicle provided with the sensing device according to any one of claims 1 to 14.
